# EUROPEAN PATENT SPECIFICATION

(11) **EP 2 455 785 B1**
(45) Date of publication and mention of the grant of the patent: **10.04.2019**
(21) Application number: 10799945.0
(22) Date of filing: 16.07.2010
(51) Int. Cl.: G02B 5/128, G09F 13/16, G09F 3/02, G09F 3/00, G09F 7/18, G09F 3/03

(54) **MICRO GLASS BEAD RETROREFLECTION SHEET EQUIPPED WITH IMAGES HAVING VISUAL RECOGNITION DIRECTIONALITY**
MIKROGLASKÜGELCHEN-RETROREFLEXIONSFOLIE MIT FÜR VISUELLE ERKENNUNG AUSGERICHTETEN BILDERN
FEUILLE DE RÉTRORÉFLEXION À MICROBILLES DE VERRE DOTÉE D'IMAGES PRÉSENTANT UNE DIRECTIVITÉ DE RECONNAISSANCE VISUELLE

(30) Priority: 17.07.2009 JP 2009169430
(43) Date of publication of application: 23.05.2012
(73) Proprietor: Nippon Carbide Industries Co., Inc., Minato-ku, Tokyo 108-8466 (JP)
(72) Inventor: MIMURA, Ikuo, Uozu-shi Toyama 973-0061 (JP); TAKAMATSU, Takeo, Toyama-shi Toyama 939-8082 (JP)
(74) Representative: Hoffmann Eitle
(86) International application number: PCT/JP2010/062127
(87) International publication number: WO 2011/007887

(56) References cited:
- EP-A1- 1 975 650
- EP-A2- 0 171 252
- WO-A1-2009/063849
- JP-A- 62 066 203
- JP-A- 2004 294 668
- JP-A- 2008 015 363
- US-A- 4 634 220

## Description

### Technical Field

The invention relates to a micro glass sphere retroreflective sheeting and particularly relates to a micro glass sphere retroreflective sheeting provided with an image having a visual direction so as to be excellent in anticounterfeit characteristic.

### Background Art

A retroreflective sheeting is excellent in nighttime visibility, and thus is preferably used for a traffic sign, a vehicle registration plate, an authentication label, or a retroreflective RFID sticker. As such a retroreflective sheeting, a retroreflective sheeting provided with an authentication mark for authenticating excellent retroreflection performance on a surface of the sheeting in order to ensure safety of a driver or a pedestrian is known. For such an authentication mark, it is required that counterfeiting thereof is difficult.

Some proposals have been conventionally made with respect to an authentication mark in which a field of view of a mark provided on such a retroreflective sheeting has a direction so as to be advantageous for preventing counterfeiting of a vehicle registration plate and car-related crimes using a counterfeit item.

US Patent No. 4,082,426 (Patent Document 1) discloses a reflective sheeting including: a monolayer of microsphere-lenses 12 adapted to receive light rays incident on the front surface of a sheeting and to form a focus of the light rays incident; a spacing layer 14 of polymeric material covering the back surfaces of the microsphere-lenses and contoured so as to generally follow those back surfaces of the microspheres; a specularly reflective layer 16 coated over the spacing layer 14; and an image layer 15 F-arranged in an imagewise pattern between the spacing layer 14 and the specularly reflective layer 16, wherein the image layer 15 is transparent, the thickness of the image layer 15 is greater in valleys 20 of the spacing layer 14 between the microsphere-lenses 12 than on curved peaks 19 directly in back of the microsphere-lenses 12, whereby the 45 degrees retroreflection from the image areas of the sheeting is 30 percent less than the retroreflection from nonimage areas.

US Patent No. 4,634,220 (Patent Document 2) discloses a sheeting on which an image is formed, including: a monolayer of transparent microlenses; a continuing layer of transparent material covering at least the back surfaces of the microlenses; and markings on the back surfaces of the layer of transparent material that are visibly distinctive from a distance, wherein at least one marking is associated with each microlens in an area in which an image is to be formed, with the center point for each such individual marking being located on an axis that extends through the center point of its associated microlens, and with the axes being substantially parallel to one another with respect to a specified image, whereby the marking can be viewed as an image when the sheeting is viewed from a specific direction. Patent Document 2 also discloses that different images can be respectively viewed from two directions.

US Patent No. 4,645,301 (Patent Document 3) discloses an improved substantially transparent sheeting containing an authenticating image, adapted to be adhesively bonded over information areas of a document without appreciably interfering with the legibility of the information, and containing a monolayer of transparent microlenses, and a transparent spacing layer covering at least the back surfaces of the microlenses, wherein a set of axial specularly reflective markings on the back surface of the transparent layer is visible as an authenticating image from the front of the sheeting only across a conical field of view having a center axis at a specific angle with the sheeting, and the authenticating image is retroreflective.

US Patent No. 4,650,283 (Patent Document 4) discloses a retroreflective sheeting including a layer including a retroreflective layer including: a monolayer of transparent microspheres partially embedded in a binder layer; and a specularly reflective layer covering the back surfaces of the microspheres, wherein the binder layer develops a color by light, some of the microspheres have tiny cavities, each cavity opens through the back surface of a microsphere, at least a part of opening is smaller than the depth of the cavity, and the cavities are visible from the front of the sheeting only across a conical field of view.

US Patent No. 4, 688, 894 (Patent Document 5) and US Patent No. 4, 691, 993 (Patent Document 6) disclose a substantially transparent sheeting including: a monolayer of microlenses; and a partially light transmissive mirror disposed behind the rear surfaces of at least some of the microlenses, wherein under retroreflective viewing conditions, the sheeting is brightly reflective in the areas occupied by the mirror, and there is an axial marking in the rear portion of or on the rear surfaces of at least some of the microlenses, the markings together are visible as an image across a predetermined conical field of view under ordinary diffuse lighting conditions.

US Patent No. 4,708,920 (Patent Document 7) discloses a sheeting containing an integrated-directional image, the sheeting including: (a) a monolayer of closely spaced transparent microlenses; (b) a means for supporting the microlenses in the monolayer; and (c) a set of axial markings of substantially equal size, each marking located at the rear of a microlens at a position such that the set of axial markings is visible throughout a selected conical field of view as an integrated-directional, half-tone image having gradations of light and dark areas and that each dot in the half-tone image having gradations leastwise has the same dimension as the diameter of the microlens.

US Patent No. 4,714,656 (Patent Document 8) discloses a contour-dependent, directional imaged sheeting including: a. a monolayer of closely spaced transparent microlenses; b. means for securing the microlenses to the sheeting in a monolayer arrangement; and c. a set of axial markings, each axial marking being located at the rear of a microlono ouch that the act of the axial markings is visible from the front of the sheeting as an intact image only when the sheeting is in substantially a predetermined nonplanar contour and is viewed within a predetermined conical field of view.

US Patent No. 5,169,707 (Patent Document 9) discloses substantially transparent laminates including: a) a base sheet including microspheres arranged in substantially a monolayer with partially-light-transmissive reflectors disposed behind the rear surface thereof (the microspheres are at least partially embedded in a transparent binder layer); b) a cover sheet bonded to the front side of the base sheet; and c) a pattern of image-formed material disposed on the cover sheet side of the microspheres, wherein the pattern is visible as a primary legend under ordinary diffuse light viewing conditions as well as retroreflective viewing conditions, and the legend being a substantially directionally variable image under ordinary diffuse light viewing conditions.

US Patent No. 6,288,842 (Patent Document 10) discloses a sheeting including: a. at least one layer of microlenses, the layer having first and second sides; b. a layer of material disposed adjacent the first side of the layer of microlenses; c. an at least partially complete image formed in the material associated with each of a plurality of the microlenses, wherein the image contrasts with the material; and d. a composite image, provided by the individual images, which appears to the unaided eye to be floating above or below the sheeting, or both.

Japanese Patent Application Laid-Open No. 2003-211572 (Patent Document 11) discloses a retroreflective article on which an image is formed using a retroreflective article including: a first layer containing a substantially transparent layer having a flat first surface; a second layer containing a retroreflective element layer having a second surface on which a specularly reflective layer is exposed, and through the steps of: A. providing a photoreactive resin on the specularly reflective layer of the second surface; B. partially reacting the photoreactive resin layer by selective irradiation of light; C. partially removing a selected region of the photoreactive resin; and D. forming an image by partially removing the specularly reflective layer.

Japanese Patent Application Laid-Open No. 2003-233336 (Patent Document 12) discloses a retroreflective article on which an image is formed using a retroreflective article including: a first layer containing a substantially transparent layer having a flat first surface; a second layer containing a retroreflective element layer having a second surface on which a specularly reflective layer is exposed, and through the steps of: A. providing a photoreactive resin layer on the specularly reflective layer of the second surface; B. partially reacting the photoreactive resin layer by selective irradiation of light; C. partially removing a selected region of the photoreactive resin; and D. forming an image by making an exposed part of the specularly reflective layer to be a nonspecular surface on the spot.

WO2008/O23834 (Patent Document 13) discloses a car license plate having a retroreflective surface provided with an authentication mark that is recognizable from a predetermined direction, wherein the authentication mark is recognizable from outside a traveling zone of a vehicle.

US Laid-Open Patent No. 2008/130126 (Patent Document 14) discloses a user interface including a sheeting, including: at least one layer of microlenses, the layer having first and second sides; a layer of material disposed adjacent the first side of the layer of microlenses; and an at least partially complete image formed in the material associated with each of a plurality of the microlenses, wherein the image contrasts with the material; a first composite image, provided by the individual images, which appears to the unaided eye to float at a first distance above the sheeting; a second composite image, provided by the individual images, which appears to the unaided eye to float at a second distance above the sheeting, wherein the first and second distances are approximately the same distance, wherein the first and second composite images are related to the same task.

According to the method using ink disclosed in Patent Document 1, no image is apparent when the sheeting is viewed from 0 degrees (i.e. perpendicular to the sheeting), but when the sheeting is viewed with 45 degrees incident light, the image is visible over the observation angle range of 360 degrees. The difference between inclination angles is not described.

With the axial markings described in Patent Documents 2 and 3, an image is visible when the sheeting is viewed from an angle between 8 degrees to 12 degrees with respect to the vertical line thereof, and thus the field of view is a ring shape having the observation angle range of 360 degrees. With the axial markings described in Patent Documents 2, inclination angles of about 64 degrees and 60 degrees are exemplified regarding the difference between the inclination angles. With the axial markings described in Patent Document 3, an inclination angle of 120 degrees is exemplified regarding the difference between the inclination angles.

The directional image formed by cavities described in Patent Document 4 is visible as an image only across a cone of about 15 degrees from the front surface. The difference between inclination angles is not described.

The axial markings described in Patent Documents 5 and 6 are visible as a dark image in a conical field of view under diffuse light or retroreflective conditions, while visible as a light image when a retroreflective light is viewed from an adjacent angle a little outside the conical field of view. Further, there is described that when a laser beam is applied from a first selected entrance angle to the sheeting in an imagewise way and then a laser beam is applied from a different selected entrance angle to the sheeting in an imagewise way so as to form two pairs of markings, a sheeting having two directional images can be formed and each of the directional images is visible in a conical field of view centered upon the entrance angle of the laser irradiation. Regarding the difference between inclination angles, there is a description of "different angle", but no specific example is provided.

The axial markings described in Patent Document 7 are visible as integrated directional photographic images within a conical field of view centered upon the entrance angle of the laser irradiation. With the axial markings described in Patent Document 7, an inclination angle of 30 degrees is exemplified regarding the difference between the inclination angles.

The axial markings described in Patent Document 8 are visible from the front of the sheeting as an intact image only when the contour-dependent, directional imaged sheeting is in substantially a predetermined nonplanar contour and is viewed within a predetermined conical field of view.

The retroreflective security laminates providing a dual level verification described in Patent Document 9 includes: a primary legend provided on the upper layer of the microspheres; and a lacquer disposed behind the rear surface of some of the microsphers similar to the microspheres of Patent Document 1, and is visible as transparent under ordinary diffuse lighting conditions, and as retro-legend under retroreflective viewing conditions. The difference between inclination angles is not described.

A floating composite image described in Patent Document 10 is visible across a cone of about 80 to 90 degrees full angle. The difference between inclination angles is not described.

With an image described in Patent Document 11, the presence of an image is clearly checked from the observation angle of 45 degrees. The difference between inclination angles is not described.

With an image described in Patent Document 12, the presence of an image is clearly checked from the observation angle of 45 degrees. The difference between inclination angles is not described.

The authentication mark described in Patent Document 13 is configured to have a large inclination angle so as to be recognizable from outside a traveling zone of a vehicle. An inclination angle of about 86 degrees is exemplified regarding the difference between the inclination angles.

A floating composite image described in Patent Document 14 is visible across a cone of about 40 degrees or more. The difference between inclination angles is not described.

### Citation List

### Patent Document

[Patent Document 1] US Patent No. 4,082,426
[Patent Document 2] US Patent No. 4,634,220
[Patent Document 3] US Patent No. 4,645,301
[Patent Document 4] US Patent No. 4,650,283
[Patent Document 5] US Patent No. 4,688,894
[Patent Document 6] US Patent No. 4,691,993
[Patent Document 7] US Patent No. 4,708,920
[Patent Document 8] US Patent No. 4,714,656
[Patent Document 9] US Patent No. 5,169,707
[Patent Document 10] US Patent No. 6,288,842
[Patent Document 11] Japanese Patent Application Laid-Open No. 2003-211572
[Patent Document 12] Japanese Patent Application Laid-Open No. 2003-233336
[Patent Document 13] WO2008/023834
[Patent Document 14] US Laid-Open Patent No. 2008/130126A1 Patent Document 2 discloses features falling under the preamble of claim 1.

### Summary of the Invention

### Objects to be Achieved by the Invention

A retroreflective sheeting is excellent in nighttime visibility, and thus has been preferably used for a traffic sign or a vehicle registration plate. The surface of such a retroreflective sheeting is provided with an authentication mark for authenticating excellent retroreflection performance in order to ensure safety of a driver or a pedestrian. For such an authentication mark, it is important that counterfeiting thereof is difficult in order to ensure safety and visibility.

An object of the invention is to improve anticounterfeit characteristic of an image that can be preferably used as an authentication mark or information indicating image on a retroreflective sheeting.

Another object of the invention is to provide information that is more excellent than that of a static image as a pseudo moving image to an observer.

Still another object of the invention is to provide a retroreflective sheeting provided with an image having excellent anticounterfeit characteristic, and also provided with an image that can provide excellent image information to an observer.

Specific use of a retroreflective sheeting according to the invention may be a traffic sign, a vehicle registration plate, an authentication label, or a retroreflective RFID sticker, and a retroreflective sheeting may be provided with an authentication mark, an anticounterfeit mark, and an information indicating image according to the invention. Means for Achieving the Objects

In order to achieve the objects, a retroreflective sheeting according to the invention has the features of claim 1.

That is, an image provided on a micro glass sphere retroreflective sheeting that can be used for the invention is configured by set images each of which is formed by a set of a large number of point images each having a visual direction so as to be visible from a predetermined direction.

The size of each of the point images used for the invention is not particularly limited as long as it allows an observer to recognize the set of the point images as a set image, but the point images themselves need not be recognizable. The size of each of the point images is preferably 10 to 1, 000 µm. Each of the point images is preferably formed to have a color difference, which is efficient to allow the point images to be detectable, from the retroreflective sheeting, on which the point images are provided, and preferably has the color difference (ΔE*) of 0.6 or more, more preferably 1.5 or more, the color difference being specified in L*a*b* color space system specified in uniform color space developed by Commission international de l'Eclairage (CIE) in 1976.

The shape of each of the point images is not particularly limited as long as it allows an observer to recognize the set of the point images as a set image, and may be a circle, an ellipse, a square, a rectangle, a parallelogram, a triangle, or the like, for example . In addition, the point images may have these shapes in combination. The border between the image and nonimage regions need not be clear and may have a color tone or shape that is gradually changing.

The provided point images may directly reach eyes of an observer, but preferably reach eyes of an observer after appropriate scale-up or scale-down by optical elements such as micro glass spheres. On any layer forming a retroreflective sheeting, a wavelength conversion layer in which fluorescent dye or the like is mixed, a light diffusion layer in which inorganic filler is dispersed, a refraction layer formed by microprisms, or the like may be provided.

In addition, unlike a print image formed by a typical printing technique to be recognizable from all directions, a group of the point images forming a set image according to the invention has a visible region allowing the set image to be visible only from a specific direction. Specifically, a visible region of each of the point images forming a set image according to the invention has a conical dimension having an apex at the point image. Such point images each having a visible region having a conical dimension may be provided on a micro glass sphere retroreflective sheeting by a conventionally known laser etching technique or photolithographic technique.

Further, the inclination angle (β) of the center axis of the visible region of each of the point images forming the set images is set to 0 to 45 degrees. Here, an azimuth (ε) of the inclination angle may be appropriately determined referring to a direction for mounting a sign plate on which a retroreflective sheeting according to the invention is to be attached. The inclination angle (β) and the azimuth (ε) are substantially determined by a direction of laser etching or a direction of light irradiation in lithography. Energy light used in lithography may be appropriately selected from visible light, ultraviolet light, electron ray, and the like. The azimuth (ε) herein indicates a direction of a center axis of the visible region when a retroreflective sheeting is viewed from a direction vertical to the retroreflective sheeting. Specifically, the azimuth indicates a direction of a straight line that is the center axis of the visible region projected on the retroreflective sheeting.

Further, in the invention, the difference (Δβ) between inclination angles of the center axes in the conical visible regions of the point images respectively in the set images adjacent to each other is set to range of between 5 and 25 degrees.

A combination of set images provided to have a difference (Δβ) between the inclination angles of the center axes set between 5 to 25 can be viewed by an observer as the combination of adjacent set images moving in a direction of the set images provided to be adjacent with afterimages when the retroreflective sheeting is oscillated in the direction of the inclination of the center axis (may be referred to as "view while oscillating", hereinafter).

The inventors of this technique have confirmed by behavior measurement of an observer that a period of oscillation of a retroreflective sheeting by an observer is generally 0.5 to 2 seconds and an angle range of oscillation is 40 degrees or less at a maximum. Under such regular oscillation observation conditions, the group of set images in combination according to the invention can provide moving image effect to an observer with afterimages.

Therefore, the moving image effect by the oscillation observation according to the invention provides excellent information providing effect to an observer unlike a typical static image. In addition, the moving image effect provides excellent anticounterfeit characteristic to a retroreflective sheeting provided with an image.

Further, since the difference (Δβ) between inclination angles of the center axes in the visible regions of the point images respectively in the set images adjacent to each other is set to range of between 5 and 25 degrees, the moving image effect can be prominent. When the difference (Δβ) between inclination angles of the center axes is set to more than 25 degrees, the time period of oscillation observation is an afterimage persistence time or longer, and thus the adjacent set images are viewed as separated images so as to significantly detract the moving image effect. On the other hand, when the difference is set to less than 5 degrees, the adjacent set images are hard to be distinctive so as to easily detract the moving image effect unfortunately.

In the conventionally known technique, set images in combination having a difference (Δβ) between inclination angles of the center axes are known, but set images in combination having the difference (Δβ) between inclination angles of the center axes set to range of between 5 and 25 degrees are not known, and thus conventional set images in combination have not provided preferable anticounterfeit characteristic or moving image effect.

The inclination angle (β) of a center axis of the visible region of each of the point images forming the set images according to the invention is set to 0 to 45 degrees as described above, and is preferably set to 0 to 30 degrees. In addition, inclination angles of the center axes in the visible regions of the point images respectively in the set images adjacent to each other are set to have a difference (Δβ) of 5 to 25 degrees. The difference (Δβ) between inclination angles of the center axes in the visible regions of the point images respectively in the set images adjacent to each other is set to range of between 5 and 25 degrees.

The inclination angle of the center axis (β) indicates an angle formed by a vertical line that extends from a point image vertically to a retroreflective sheeting and a center axis and may be an angle made by a center axis inclining to one side from the vertical line of the retroreflective sheeting or may be an angle made by a center axis inclining to the other side when the retroreflective sheeting is viewed along a direction parallel thereto (when viewed from a surface of section). An azimuth (ε) of the inclination angle may be appropriately changed to any direction with respect to the sheeting from 0 to 360 degrees.

Specifically, when the inclination angle (β1) of the center axis of the visible region of each of the point images in one set image is 10 degrees, for example, and when the difference (Δβ) between the inclination angle (β1) and the inclination angle (β2) of the center axis of the visible region of each of the point images in a set image adjacent to the one set image is set to 5 and difference (Δε) between an azimuth of each of the point images in the one set image and an azimuth of each of the point images in the set image adjacent to the one set image is set to 0 degrees, the inclination angle (β2) of the center axis of the visible region of each of the point images in the set image adjacent to the one set image is 5 degrees or 15 degrees. Alternatively, when the difference (Δβ) between inclination angles of the center axes in the visible regions of the point images respectively in the set images adjacent to each other is set to 25 degrees, the inclination angle (β2) of the center axis of the visible region of the point images respectively in the set images adjacent to each other is -15 degrees or 35 degrees. Here, -15 degrees indicates that the center axis inclines 15 degrees to a direction opposite to the direction of β1 with reference to the vertical line extending from the point image.

When the inclination angle (β) of the center axis of the conical visible region according to the invention is set to more than 45 degrees, an observer has to view the sheeting while significantly inclining the sheeting with respect to the line of sight when the observer observes the sheeting, and thus visibility is detracted unfortunately.

In the invention, the difference (Δε) between an azimuth of each of the point images in at least one of the set images and an azimuth of each of the point images in another one of the set images adjacent to the at least one of the set images is preferably set to 0 to 10 degrees.

The difference (Δε) between the azimuths is more preferably 0 to 7 degrees.

The difference (Δε) between the azimuths is preferably 10 degrees or less because the adjacent set images are easy to be distinctive. Set images in combination having such a difference (Δε) between azimuths have not been conventionally known.

In addition, the visible region of each of the point images forming the set image according to the invention preferably has a conical dimension having an apex at the point image and the dimension (α) of the conical visible region is preferably 5 to 20 degrees.

The dimension (α) of the conical visible region is preferably 5 degrees or more because the set image formed by a set of point images is excellent in visibility. The dimension (α) of the conical visible region is preferably 20 degrees or less because the adjacent set images are easy to be distinctive.

Such dimension (α) of the visible region is generated for the reason that the point images provided on the specularly reflective layer forming the micro glass sphere reflective elements diffuse due to spherical aberration of the micro glass sphere lenses, and the like.

As the retroreflective sheeting preferable for providing a group of point images of the invention, an open lens micro glass sphere retroreflective sheeting, an enclosed lens micro glass sphere retroreflective sheeting or a capsular lens micro glass sphere retroreflective sheeting, or combination thereof may be used.

In any type of retroreflective sheeting, it is preferable to provide a specularly reflective layer on micro glass sphere reflective elements. As a specularly reflective layer, generally, aluminum, silver, nickel, molybdenum, copper, and the like may be appropriately used singularly, in combination, or in multilayer thereof.

In addition, the point images according to the invention are preferably provided on the specularly reflective layer of the micro glass sphere reflective elements.

The point images provided on the specularly reflective layer of the micro glass sphere reflective elements are preferably provided by removing the specularly reflective layer by laser light irradiation. The removal of the specularly reflective layer by laser light irradiation may be performed by irradiating laser light from the front surface of the sheeting from an inclining angle, or by irradiating laser light directly to metal components contained in the specularly reflective layer from the rear surface thereof to remove the metal components, for example.

In the invention, the set images provided adjacent to each other preferably have the same or homologous shapes. Such a combination of set images having the same or homologous shapes is preferable because the moving image effect, which is one of the objects of the invention, is prominent when observed while changing the view angle. The view angle herein indicates an angle formed by an observer observing an image provided on the sheeting with respect to a vertical line extending from the image provided on the sheeting when the observer observes the sheeting.

The whole of the set images need not have the same or homologous shapes but may provide the moving image effect when parts of the set images have the same or homologous shapes.

In the invention, the set images in combination provided adjacent to each other having the same or homologous shapes are preferable to have repeated patterns of the same or homologous shapes with a phase difference.

For example, a combination of sinusoidal curve patterns each having a shape of mountain-shaped arc repeatedly arranged may be exemplified as preferable shapes. A combination of the set images that are such sinusoidal curves having repeated patterns of the same or homologous shapes with a phase difference provides moving image effect showing as if a sinusoidal wave were moving laterally.

In the invention, it is more preferable that the set images in combination provided adjacent to each other having the same or homologous shapes have repeated patterns of the same or homologous shapes with a phase difference, and further the phase difference is 1/n (n is 2 to 5) of the repeat period so as to provide prominent moving image effect.

### Effect of the Invention

The invention relates to a retroreflective sheeting that is provided with images having visual directions, the images being set images arranged adjacent to each other having repeated patterns of the same or homologous shapes with a phase difference, and that is provided with an image having improved anticounterfeit characteristic as an authentication mark or an information indicating mark. Two or more images having different visual directions as described above provided adjacent to each other can provide moving image effect to show a pseudo moving image with afterimages when an observer slightly changes his/her line of sight and can provide excellent anticounterfeit characteristic.

### Brief Description of the Drawings

FIG. 1 is a view showing a visual direction of a point image according to a conventional technique.
FIG. 2 is a view showing a visual direction of a point image according to the invention.
FIGS. 3A and 3B are perspective views showing a retroreflective sheeting provided with set images each having a visual direction according to an embodiment of the invention.
FIGS. 4A, 4B, and 4S are views for illustrating the set images on the retroreflective sheeting shown in FIGS. 3A and 3B.
FIG. 5 is a sectional view showing retroreflection on the retroreflective sheeting of FIGS. 3A and 3B.
FIG. 6 is a sectional view showing retroreflection by which the set image shown in FIG. 3A is made.
FIG. 7 is a sectional view showing retroreflection by which the set image shown in FIG. 3B is made.
FIGS. 8A to 8C are perspective views showing a retroreflective sheeting provided with set images each having a visual direction according to another embodiment of the invention.
FIGS. 9A to 9C and 9S are views showing set images on the retroreflective sheeting shown in FIGS. 8A to 8C.
FIGS. 10A to 10C and 10S are views showing set images according to still another embodiment of the invention.
FIGS. 11A to 11C and 11S are views showing set images according to still another embodiment of the invention.
FIGS. 12A to 12C and 12S are views showing set images according to still another embodiment of the invention.

### Best Mode for Carrying Out the Invention

A preferred embodiment of a retroreflective article according to the invention will be explained hereinafter referring to the drawings.

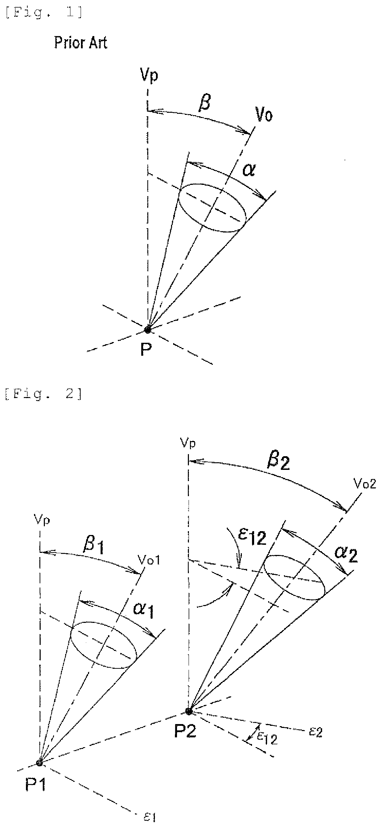

FIG. 1 is a view showing a visual direction of a point image according to a conventional technique.

A point image (P) is provided in such a manner that a center axis (Vo) of a conical visible region inclines and an inclination angle (β) is defined by an angle between a vertical line (Vp) to a surface of a retroreflective sheeting extending from the point image (P) and a center axis (Vo) of the conical visible region. The conical visible region has a dimension (α).

FIG. 2 is a view showing a visual direction of a point image according to the invention.

Similarly to FIG. 1, two point images (P1, P2) are provided in such a manner that center axes (Vo1, Vo2) of conical visible regions of the respective point images (P1, P2) incline and the inclination angles (β1, β2) of the respective center axes (Vo1, Vo2) are defined by angles between vertical lines (Vp) extending from the respective point images (P1, P2) with respect to the surface of retroreflective sheeting and the center axes (Vo1, Vo2) of the respective conical visible regions. The respective conical visible regions have dimensions (α1, α2).

An angle formed between an azimuth (ε1) and an azimuth (ε2) of the respective center axes (Vo1, Vo2) of the two point images (P1, P2) is indicated by ε12 (Δε). The angle (ε12) is equivalent to an angle between a plane containing the vertical line (Vp) and the axis (Vo1) and a plane containing the vertical line (Vp) and the axis (Vo2). On the other hand, all center axes of point images according to the conventional technique have the same azimuth, and thus ε12 is zero.

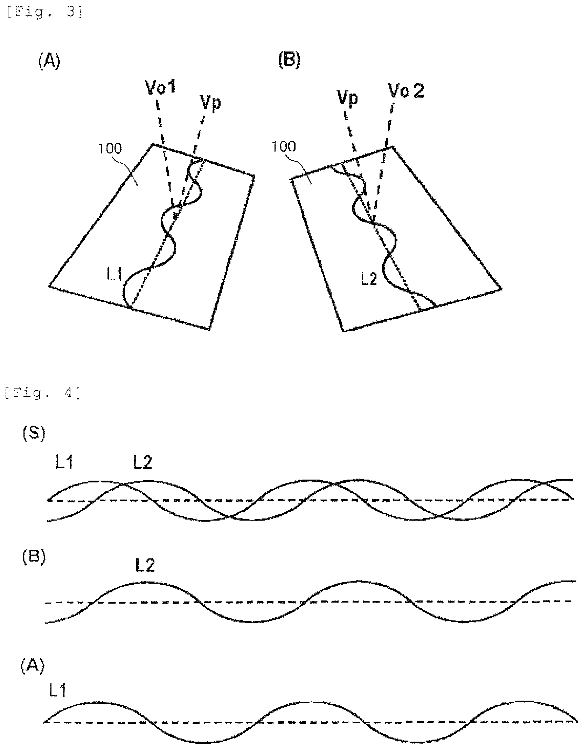

FIGS. 3A and 3B are perspective views showing a retroreflective sheeting provided with set images each having a visual direction according to an embodiment of the invention.

As shown in FIG. 3A, on a retroreflective sheeting 100, a sinusoidal set image (L1) is made. The inclination direction of a center axis (Vo1) of the visible region of the point images constituting the set image inclines leftward as shown in FIG. 3A with respect to the vertical line (Vp) to the retroreflective sheeting.

As shown in FIG. 3B, on the retroreflective sheeting 100, a sinusoidal set image (L2) adjacent to the set image (L1) is also made. The inclination direction of a center axis (Vo2) of the visible region of the point images constituting the set image (L2) inclines rightward in FIG. 3B with respect to the vertical line (Vp) to the retroreflective sheeting. In other words, the center axis (Vo1) and the center axis (Vo2) incline in opposite directions with respect to the vertical line (Vp) .

In addition, inclination angles of the center axes in the visible regions of the point images respectively in the set images (L1 and L2) are set to 45 degrees or less with respect to the vertical line (Vp), and the difference (Δβ) between the inclination angles of the center axes in the visible regions of the point images respectively in the set images (L1 and L2) adjacent to each other is set to range of between 5 and 25 degrees. The set image (L2) is made to have a shape same as that of the set image (L1) with a phase difference. The phase difference is set to a quarter of a period of a sinusoidal wavelength.

FIGS. 4A, 4B, and 4S are views for illustrating the set images (L1 and L2) on the retroreflective sheeting shown in FIGS. 3A and 3B.

FIG. 4A is a plan view of the sinusoidal set image (L1) shown in FIG. 3A, and FIG. 4B shows a plan view of the sinusoidal set image (L2) shown in FIG. 3B.

FIG. 4S is a plan view in which the set image (L1) and the set image (L2) are made to be superimposed. However, the two set images (L1 and L2) are never viewed together from the same view angle. When the set images (L1 and L2) are viewed while oscillating, the set images (L1 and L2) are viewed alternately, and can be viewed as a sinusoidal set image moving laterally with afterimages.

Next, a principle for the fact that the center axis (Vo1) of the visible region of the set image (L1) and the center axis (Vo2) of the visible region of the set image (L2) are different from each other will be described.

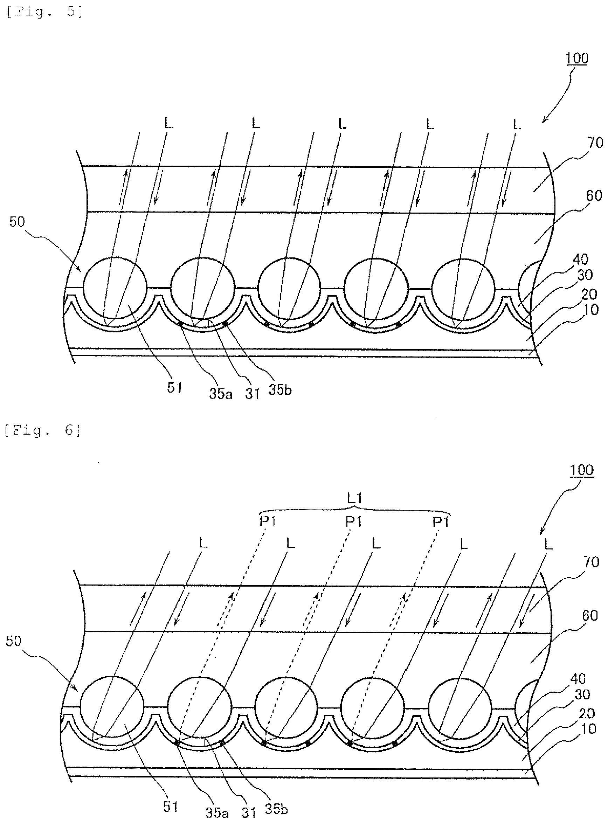

FIG. 5 is a sectional view showing retroreflection on the retroreflective sheeting of FIGS. 3A and 3B. Specifically, FIG. 5 is a sectional view in a region where the set image (L1) and the set image (L2) shown in FIGS. 4A, and 4B intersect with each other. It should be noted that the retroreflective sheeting 100 of the invention is not limited to the retroreflective sheeting shown in FIG. 5, but an open lens micro glass sphere retroreflective sheeting, an enclosed lens micro glass sphere retroreflective sheeting of a capsular lens micro glass sphere retroreflective sheeting described above, or combination thereof may be used.

As shown in FIG. 5, the retroreflective sheeting 100 includes: a surface protective layer 70; a holding layer 60 on one surface of the surface protective layer 70; a microlens layer 50 including a plurality of microlenses 51 held on a surface of the holding layer 60 opposite to the surface protective layer 70; a specularly reflective layer 30 provided on the microlens layer 50 opposite to the holding layer 60; a focus forming layer 40 provided between the respective microlenses 51 and the specularly reflective layer 30; an adhesive layer 20 provided on a surface of the specularly reflective layer 30 opposite to the microlens layer 50; and a protective sheet 10 protecting the adhesive layer 20. A printed layer on which a predetermined pattern is appropriately printed may be provided between the surface protective layer 70 and the holding layer.

The surface protective layer 70 is made of a light transmissive resin in a shape of flat film.

The holding layer 60 is light transmissive and into which the microlenses 51 are embedded up to substantially the center of the microlenses 51 from the opposite side of the surface protective layer 70.

The plurality of microlenses 51 of the microlens layer 50 are respectively embedded into the holding layer 60 up to substantially the center thereof as described above so that halves of their surfaces are covered by the holding layer 60. In addition, portions of the microlenses 51 that are not covered by the holding layer 60 are covered by the focus forming layer 40.

The specularly reflective layer 30 is provided on a surface of the focus forming layer 40. The surface of the specularly reflective layer 30 on the side of the microlenses 51 and surfaces of the respective microlenses 51 oppose to each other with a certain distance through the focus forming layer 40 so that reflection regions 31 are formed.

On the reflection regions 31 in positions where the set image (L1) is made in the specularly reflective layer 30, missing parts 35a of a dot shape are formed on one side with respect to the centers of the respective microlenses 51. Each of the missing parts 35a is formed at the same position on each of the reflection regions 31 opposing each of the microlenses 51 in positions where the set image (L1) is made. On the reflection regions 31 in positions where the set image (L2) is made in the specularly reflective layer 30, missing parts 35b of a dot shape are formed on the other side with respect to the centers of the respective microlenses 51. Each of the missing parts 35b is formed at the same position on each of the reflection regions 31 opposing each of the microlenses 51 in positions where the set image (L2) is made.

FIG. 5 is a sectional view of the region where the set image (L1) and the set image (L2) intersect with each other as described above. Therefore, the missing parts 35a and 35b of a dot shape are respectively formed on reflection regions 31 opposing the same microlenses 51. In FIG. 5, the reflection regions 31 in the positions where the set image (L1) and the set image (L2) are made, and the reflection regions 31 in positions where the missing parts 35a or 35b are not formed are shown.

The adhesive layer 20 provided on the side of the specularly reflective layer 30 opposite to the microlens layer 50 is provided in order to attach the retroreflective sheeting 100 to another object that is not shown. The protective sheet 10 protects the adhesive layer 20 until the retroreflective sheeting 100 is attached to another object.

Materials of each of the members included in the retroreflective sheeting 100 will be described.

The surface protective layer 70 is made of vinyl chloride resin. The holding layer 60 is made of acrylic resin. The microlenses 51 are made of glass. The focus forming layer 40 is made of acrylic resin. The specularly reflective layer 30 is made of deposited aluminum. The adhesive layer 20 is made of acrylic resin.

The way of making the set image (L1) and the set image (L2) on the retroreflective sheeting 100 will be described.

As shown in FIG. 5, lights L enter the retroreflective sheeting 100 from the surface protective layer 70 side of the retroreflective sheeting 100 in a direction having a predetermined inclination angle with respect to a direction vertical to the surface of the retroreflective sheeting 100. The lights L entering the retroreflective sheeting 100 are refracted at the surface of the microlenses 51 and output from the microlenses 51. The lights L output from the microlenses 51 are focused at the respective reflection regions 31 on the specularly reflective layer 30. The focused lights are reflected at the reflection regions 31 so as to enter the microlenses 51 again. Then, the lights L are refracted at the surface of the microlenses 51 and output from the microlenses 51. At this time, the lights L are output to a direction having an inclination angle, which is the same as that when the lights L enter the retroreflective sheeting 100, with respect to the direction vertical to the surface of the retroreflective sheeting 100. Therefore, the retroreflective sheeting 100 reflects the lights irradiated from a light source toward the light source. At this time, as long as the lights focused at the respective reflection regions 31 on the specularly reflective layer 30 are not focused at the missing parts 35a or the missing part 35b, the focused lights are also reflected in the reflection regions 31 where the missing parts 35a and 35b are formed as shown in FIG. 5. Therefore, an observer observing the retroreflective sheeting 100 from the direction same as that of the lights L cannot view the set images (L1 and L2).

FIG. 6 is a sectional view showing retroreflection by which the set image shown in FIG. 3A is made. When lights entering the microlenses 51 tο form the set image (L1) among lights L entering the retroreflective sheeting 100 from the center axis (Vo1), which are lights L entering with an inclination angle (β1) with respect to the vertical line (Vp) to the surface of the retroreflective sheeting 100, are focused on surfaces of the reflection regions 31 of the specularly reflective layer 30, they are focused at the missing parts 35a of a dot shape on the reflection regions 31 so as not to be reflected as shown in FIG. 6. Therefore, when the lights L enter from a direction having an inclination angle (β1) with respect to the vertical line (Vp) to the surface of the retroreflective sheeting 100, retroreflected lights are missing at the positions where the set image (L1) is made as depicted by a dashed line in FIG. 6 so as to form point images (P1) respectively forming the set image (L1). On the other hand, at positions where the set image (L1) is not formed, the lights L entering the microlenses 51 are reflected at the specularly reflective layer 30 so as to be output in a direction having an inclination angle (β1) with respect to the vertical line (Vp) to the surface of the retroreflective sheeting 100, which is a direction along the center axis (Vo1). Accordingly, an observer observing the retroreflective sheeting 100 along the center axis (Vo1) can view the set image (L1) as a comparatively dark set image (L1) on the specularly reflective layer 31.

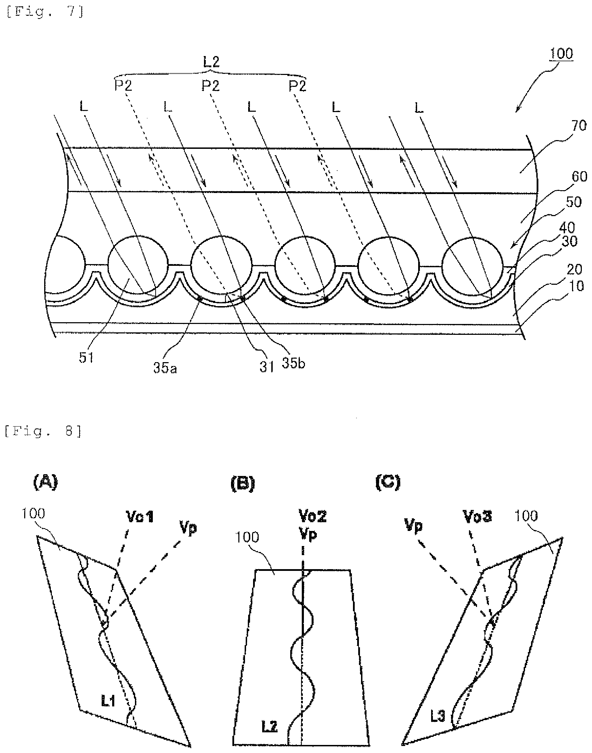

FIG. 7 is a sectional view showing retroreflection by which the set image shown in FIG. 3B is made. When lights entering the microlenses 51 to form the set image (L2) among lights L entering the retroreflective sheeting 100 from the center axis (Vo2), which are lights L entering with an inclination angle (β2) with respect to the vertical line (Vp) to the surface of the retroreflective sheeting 100, are focused on surfaces of the reflection regions 31 of the specularly reflective layer 30, they are focused at the missing parts 35b of a dot shape on the reflection region 31 so as not to be reflected as shown in FIG. '7. Therefore, when the lights L enter from a direction having an inclination angle (β2) with respect to the vertical line (Vp) to the surface of the retroreflective sheeting 100, retroreflected lights are missing at the positions where the set image (L2) is made as depicted by a dashed line in FIG. 7 so as to form point images (P2) respectively forming the set image (L2). On the other hand, at positions where the set image (L2) is not formed, the lights L entering the microlenses 51 are reflected at the specularly reflective layer 30 so as to be output in a direction having an inclination angle (β2) with respect to the vertical line (Vp) to the surface of the retroreflective sheeting 100, which is a direction along the center axis (Vo2). Accordingly, an observer observing the retroreflective sheeting 100 along the center axis (Vo2) can view the set image (L2) as a comparatively dark set image (L2) on the specularly reflective layer 31.

The dimensions (α1, α2) of the conical visible regions may be appropriately changed by changing the size of the missing parts 35a and 35b of a dot shape.

Next, another embodiment of the invention will be described. FIGS. 8A to 8C are perspective views showing a retroreflective sheeting provided with set images each having a visual direction according to another embodiment of the invention. As shown in FIG. 8A, on a retroreflective sheeting 100, a sinusoidal set image (L1) is made. The inclination direction of a center axis (Vo1) of the visible region of the point images constituting the set image inclines leftward in FIG. 8A with respect to a vertical line (Vp) to the retroreflective sheeting.

As shown in FIG. 8B, on the retroreflective sheeting 100, a sinusoidal set image (L2) adjacent to the set image (L1) is made. The inclination direction of a center axis (Vo2) of the visible region of the point images constituting the set image (L2) aligns with the vertical line (Vp) to the retroreflective sheeting 100. In addition, the set image (L2) is made to have a shape same as that of the set image (L1) with a phase difference. The phase difference is set to a sixth part of a period of a sinusoidal wavelength.

As shown in FIG. 8C, on a retroreflective sheeting 100, a sinusoidal set image (L3) is made. The inclination direction of a center axis (Vo3) of the visible region of the point images constituting the set image (L3) inclines rightward in FIG. 8C with respect to the vertical line (Vp) to the retroreflective sheeting 100. In other word, the center axis (Vo1) and the center axis (Vo3) incline in opposite directions with respect to the vertical line (Vp). In addition, the set image (L3) is made to have a shape same as that of the set image (L1) with a phase difference. The phase difference is set to two sixths of a period of a sinusoidal wavelength.

In addition, inclination angles of the center axes in the visible regions of the point images in the respective set images (L1, L2, L3) are set to 45 degrees or less with respect to the vertical line (Vp), and the difference (Δβ) between the inclination angles of the center axes in the visible regions of the point images respectively in the set images (L1, L2, L3) adjacent to each other is set to range of between 5 and 25 degrees.

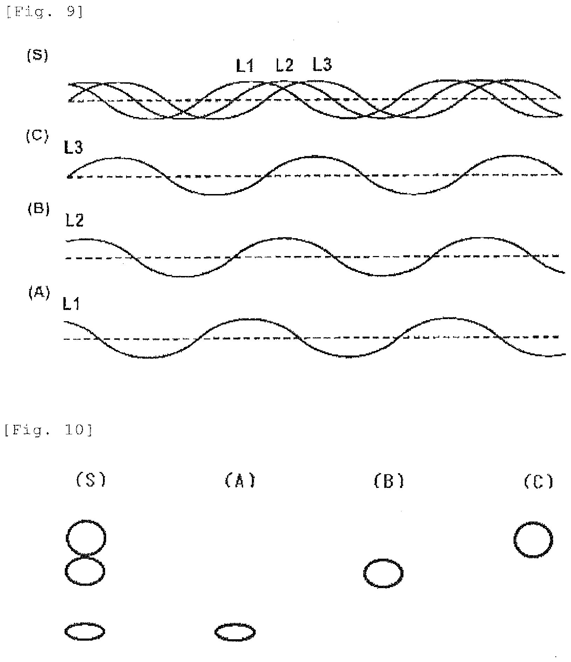

FIGS. 9A to 9C and 9S are views showing the set images (L1, L2, L3) on the retroreflective sheeting 100 shown in FIG. 8A to 8C.

FIG. 9A is a plan view of the sinusoidal set image (L1) shown in FIG. 8A, FIG. 9B is a plan view of the sinusoidal set image (L2) shown in FIG. 8B, and FIG. 9C is a plan view of the sinusoidal set image (L3) shown in FIG. 8C.

FIG. 9S is a plan view in which the three sinusoidal set images (L1, L2, and L3) are made to be superimposed. However, the three set images (L1, L2, and L3) are never viewed together from the same view angle. When the set images (L1, L2, and L3) are viewed while oscillating, the set images (L1, L2, and L3) are viewed alternately, and can be viewed as a sinusoidal set image moving laterally with afterimages.

FIGS. 10A to 10C and 10S are views showing set images according to still another embodiment of the invention.

FIGS. 10A, 10B, and 10C are a combination of elliptical set images that can be observed from different view angles. The set images shown in FIGS. 10A, 10B, and 10C are arranged in a vertical direction in FIGS. 10A, 10B, and 10C. These set images may have the same or homologous shapes.

From a fixed view angle, an observer can observe only one of these set images, but cannot observe other set images. To observe another set image, the observer has to move the viewpoint to a different view angle and then observe. From the different fixed view angle, other two images cannot be observed similarly.

In FIGS. 10A to 10C and 10S, three set images are provided in combination in such a manner that inclination angles of the center axes in the visible regions of the point images respectively in the set images shown in FIGS. 10A, 10B, and 10C are set to 45 degrees or less with respect to the vertical line to the retroreflective sheeting, and the difference (Δβ) between the inclination angles of the center axes in the visible regions of the point images respectively in the set images shown in FIGS. 10A, 10B, and 10C adjacent to each other is set to range of between 5 and 25 degrees, and preferably set to 8 to 22 degrees. When the retroreflective sheeting is oscillated in the direction of the inclination angle of the center axis so as to view the images while oscillating, the combination of the three set images can provide an effect showing as if an object were moving up and down with afterimages to the observer. The observer would view an image as if a ball were bouncing up and down.

A retroreflective sheeting provided with meaningless set images in combination can show moving image phenomenon by being viewed while oscillated under specific conditions, and thus can provide preferable anticounterfeit characteristic.

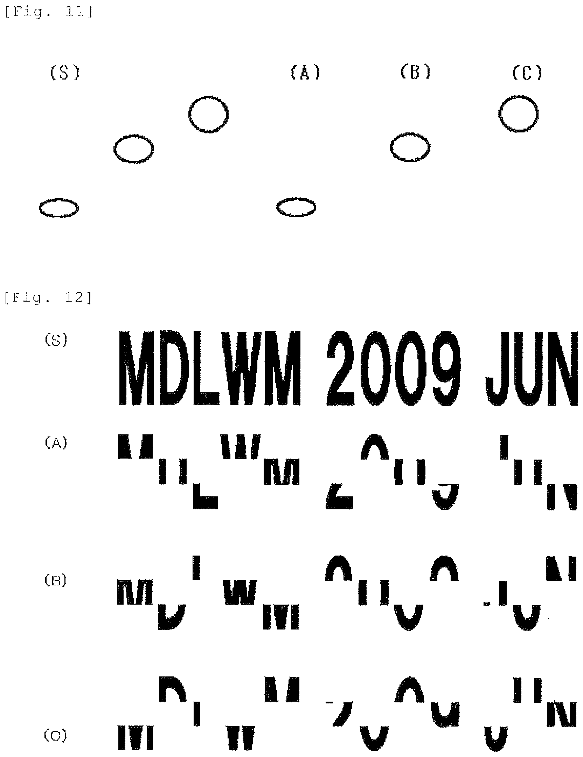

FIGS. 11A to 11C and 11S are views showing set images according to still another embodiment of the invention.

FIGS. 11A, 11B, and 11C are a combination of elliptical set images that can be observed from different view angles. The set images shown in FIGS. 11A, 11B, and 11C are arranged in an oblique direction in FIGS. 11A, 11B, and 11C with phase differences. These set images may have the same or homologous shapes.

From a fixed view angle, an observer can observe only one of these set images, but cannot observe other set images. To observe another set image, the observer has to move the viewpoint to a different view angle and then observe. From the different fixed view angle, other two images cannot be observed similarly.

In FIGS. 11A to 11C and 11S, three set images are provided in combination in such a manner that inclination angles of the center axes in the visible regions of the point images respectively in the set images shown in FIGS. 11A, 11B, and 11C are set to 45 degrees or less with respect to the vertical line to the retroreflective sheeting, and the difference (Δβ) between the inclination angles of the center axes in the visible regions of the point images respectively in the set images shown in FIGS. 11A, 11B, and 11C adjacent to each other is set to range of between 5 and 25 degrees, and preferably set to 8 to 22 degrees. When the retroreflective sheeting is oscillated in the direction of the inclination angle of the center axis so as to view the images while oscillating, the combination of the three set images can provide an effect showing as if an object were moving side to side and up and down with afterimages to the observer. The observer would view an image as if a ball were bouncing in lateral direction.

A retroreflective sheeting provided with meaningless set images in combination can show moving image phenomenon by being viewed while oscillated under specific conditions, and thus can provide preferable anticounterfeit characteristic similar to the embodiment shown in FIGS. 10A to 10C and 10S.

FIGS. 12A to 12C and 12S are views showing set images according to still another embodiment of the invention.

FIGS. 12A, 12B, and 12C are a combination of set images of meaningless shapes that can be observed from different view angles. From a fixed view angle, an observer can observe only one of these set images, but cannot observe other set images. To observe another set image, the observer has to move the viewpoint to a different view angle and then observe. From the different fixed view angle, other two set images cannot be observed similarly.

In FIGS. 12A to 12C and 12S, three set images are provided in combination in such a manner that inclination angles of the center axes in the visible regions of the point images respectively in the set images shown in FIGS. 12A, 12B, and 12C are set to 45 degrees or less with respect to the vertical line to the retroreflective sheeting, and the difference (Δβ) between the inclination angles of the center axes in the visible regions of the point images respectively in the set images shown in FIGS. 12A, 12B, and 12C adjacent to each other is set to range of between 5 and 25 degrees, and preferably set to 8 to 22 degrees. When the retroreflective sheeting is oscillated in the direction of the inclination angle of the center axis so as to view the images while oscillating, the combination of the three set images combined with set images provided adjacent to each other can provide an effect showing an image with meaning shown in FIG. 12S that is different from individual set images with afterimages to the observer.

A retroreflective sheeting provided with meaningless set images in combination can show information with meaning by being viewed while oscillated under specific conditions so as to provide preferable anticounterfeit characteristic.

### Industrial Applicability

As specific use of a retroreflective sheeting according to the invention, the retroreflective sheeting can be used as a retroreflective sheeting that can be used for a traffic sign, a construction sign, a commercial sign, a vehicle registration plate, a retroreflective sticker, a retroreflective RFID tag, and the like and that has excellent anticounterfeit characteristic and information providing characteristic.

An article according to the invention is a retroreflective sheeting that is provided with an image having a visual direction and has excellent anticounterfeit characteristic so that the retroreflective sheeting can be used for a sign, label and the like, on which a retroreflective sheeting provided with an image having anticounterfeit characteristic is attached.

In addition, a sign, a label, or the like can be an authentication mark that is difficult to be counterfeited by attaching a retroreflective sheeting according to the invention.

### Description of Reference Numerals

10 ... protective sheet
20 ... adhesive layer
30 ... specularly reflective layer
31 ... reflection region
35a, 35b ... missing part
40 ... focus forming layer
50 ... microlens layer
51 ... microlens
60 ... holding layer
70 ... surface protective layer
100 ... retroreflective sheeting
P, P1, P2 ... point image
Vp ... vertical line
Vo ... center axis
Vo1, Vo2, Vo3 ... center axis
L ... light
L1, L2, and L3 ... set image

## Claims

1. A micro glass sphere retroreflective sheeting provided with at least two adjacent set images (L1, L2, L3) each of which is formed by a set of a large number of point images (P, P1,P2) each having a visual direction so as to be visible from a predetermined direction, wherein
a visible region of each of the point images forming the set images (L1, L2, L3) has a conical dimension having an apex at each of the point images,
an inclination angle (β) of a center axis of the visible region of each of the point images (P, P1, P2) forming the set images is set to 0 to 45 degrees,
**characterized in that**
a difference (Δβ) between the inclination angles of the center axes in the visible regions of the point images respectively in the set images adjacent to each other is set to range of between 5 and 25 degrees.

2. The micro glass sphere retroreflective sheeting provided with set images having visual directions according to claim 1, wherein the difference (Δβ) between the inclination angles of the center axes in the visible regions of the point images (P, P1, P2) respectively in the set images adjacent to each other is set to 8 to 22 degrees.

3. The micro glass sphere retroreflective sheeting provided with set images having visual directions according to claim 1 or 2, wherein the inclination angle (β) of the center axis of the visible region of each of the point images forming the set images is set to 0 to 30 degrees.

4. The micro glass sphere retroreflective sheeting provided with set images having visual directions according to any one of claims 1 to 3, wherein a difference (Δε) between an azimuth of each of the point images in at least one of the set images and an azimuth of each of the point images in another one of the set images adjacent to the at least one of the set images is set to 0 to 10 degrees.

5. The micro glass sphere retroreflective sheeting provided, with set images having visual directions according to claim 4, wherein the difference (Δε) between an azimuth of each of the point images in at least one of the set images and an azimuth of each of the point images in another one of the set images adjacent to the at least one of the set images is set to 0 to 7 degrees.

6. The micro glass sphere retroreflective sheeting provided with set images having visual directions according to any one of claims 1 to 5, wherein a dimension (α) of the conical dimension of the visible region of each of the point images forming the set images is set to 5 to 20 degrees.

7. The micro glass sphere retroreflective sheeting provided with set images having visual directions according to any one of claims 1 to 6, wherein the micro glass sphere retroreflective sheeting is an open lens micro glass sphere retroreflective sheeting, an enclosed lens micro glass sphere retroreflective sheeting, or a capsular lens micro glass sphere retroreflective sheeting.

8. The micro glass sphere retroreflective sheeting according to one of the preceding claims, wherein when the retroreflective sheeting is oscillated, the visible regions partially overlap.

## Patentansprüche

1. Retroreflektierende Glasmikrokugelfolie, versehen mit zumindest zwei benachbarten Satzbildern (L1, L2, L3), deren jedes durch einen Satz einer großen Menge an Punktbildern (P, P1, P2) gebildet ist, die jeweils eine Sichtrichtung aufweisen, um aus einer vorbestimmten Richtung sichtbar zu sein, wobei
ein sichtbarer Bereich jedes der Punktbilder, die die Satzbilder (L1, L2, L3) bilden, eine konische Abmessung aufweist, die eine Spitze an jedem der Punktbilder aufweist,
ein Neigungswinkel (β) einer Mittelachse des sichtbaren Bereichs jedes der Punktbilder (P, P1, P2), die die Satzbilder bilden, auf 0 bis 45 Grad eingestellt ist,
**dadurch gekennzeichnet, dass**
eine Differenz (Δβ) zwischen den Neigungswinkeln der Mittelachsen in den sichtbaren Bereichen der Punktbilder bzw. in den miteinander benachbarten Satzbildern auf einen Bereich zwischen 5 und 25 Grad eingestellt ist.

2. Retroreflektierende Glasmikrokugelfolie, versehen mit Satzbildern, die Sichtrichtungen aufweisen, nach Anspruch 1, wobei die Differenz (Δβ) zwischen den Neigungswinkeln der Mittelachsen in den sichtbaren Bereichen der Punktbilder (P, P1, P2) bzw. in den miteinander benachbarten Satzbildern auf 8 bis 22 Grad eingestellt ist.

3. Retroreflektierende Glasmikrokugelfolie, versehen mit Satzbildern, die Sichtrichtungen aufweisen, nach Anspruch 1 oder 2, wobei der Neigungswinkel (β) der Mittelachse des sichtbaren Bereichs jedes der Punktbilder, die die Satzbilder bilden, auf 0 bis 30 Grad eingestellt ist.

4. Retroreflektierende Glasmikrokugelfolie, versehen mit Satzbildern, die Sichtrichtungen aufweisen, nach einem der Ansprüche 1 bis 3, wobei eine Differenz (Δε) zwischen einem Azimut jedes der Punktbilder in zumindest einem der Satzbilder und einem Azimut jedes der Punktbilder in einem anderen der Satzbilder, das mit dem zumindest einen der Satzbilder benachbart ist, auf 0 bis 10 Grad eingestellt ist.

5. Retroreflektierende Glasmikrokugelfolie, versehen mit Satzbildern, die Sichtrichtungen aufweisen, nach Anspruch 4, wobei eine Differenz (Δε) zwischen einem Azimut jedes der Punktbilder in zumindest einem der Satzbilder und einem Azimut jedes der Punktbilder in einem anderen der Satzbilder, das mit dem zumindest einen der Satzbilder benachbart ist, auf 0 bis 7 Grad eingestellt ist.

6. Retroreflektierende Glasmikrokugelfolie, versehen mit Satzbildern, die Sichtrichtungen aufweisen, nach einem der Ansprüche 1 bis 5, wobei eine Abmessung (α) der konischen Abmessung des sichtbaren Bereichs jedes der Punktbilder, die die Satzbilder bilden, auf 5 bis 20 Grad eingestellt ist.

7. Retroreflektierende Glasmikrokugelfolie, versehen mit Satzbildern, die Sichtrichtungen aufweisen, nach einem der Ansprüche 1 bis 6, wobei die retroreflektierende Glasmikrokugelfolie eine retroreflektierende Glasmikrokugelfolie mit offener Linse, eine retroreflektierende Glasmikrokugelfolie mit geschlossener Linse oder eine retroreflektierende Glasmikrokugelfolie mit kapselartiger Linse ist.

8. Retroreflektierende Glasmikrokugelfolie nach einem der vorstehenden Ansprüche, wobei sich die sichtbaren Bereiche, wenn die retroreflektierende Folie zum Schwingen gebracht wird, teilweise überlappen.

## Revendications

1. Film rétro-réfléchissant à microbilles de verre muni d'au moins deux images d'ensemble adjacentes (L1, L2, L3), chacune d'elles étant formée par un ensemble d'un grand nombre d'images ponctuelles (P, P1, P2) ayant chacune une direction visuelle de manière à être visible depuis une direction prédéterminée, dans lequel
une région visible de chacune des images ponctuelles formant les images d'ensemble (L1, L2, L3) a une dimension conique ayant un sommet au niveau de chacune des images ponctuelles,
un angle d'inclinaison (β) d'un axe central de la région visible de chacune des images ponctuelles (P, P1, P2) formant les images d'ensemble est défini de 0 à 45 degrés,
**caractérisé en ce que**
une différence (Δβ) entre les angles d'inclinaison des axes centraux dans les régions visibles des images ponctuelles, respectivement dans les images d'ensemble adjacentes les unes aux autres, est définie dans une plage comprise entre 5 et 25 degrés.

2. Film rétro-réfléchissant à microbilles de verre muni d'images d'ensemble ayant des directions visuelles selon la revendication 1, dans lequel la différence (Δβ) entre les angles d'inclinaison des axes centraux dans les régions visibles des images ponctuelles (P, P1, P2) respectivement dans les images d'ensemble adjacentes est défini de 8 et 22 degrés.

3. Film rétro-réfléchissant à microbilles de verre muni d'images d'ensemble ayant des directions visuelles selon la revendication 1 ou 2, dans lequel l'angle d'inclinaison (β) de l'axe central de la région visible de chacune des images ponctuelles formant les images d'ensemble est défini de 0 à 30 degrés.

4. Film rétro-réfléchissant à microbilles de verre muni d'images d'ensemble ayant des directions visuelles selon l'une quelconque des revendications 1 à 3, dans lequel une différence (Δε) entre un azimut de chacune des images ponctuelles dans au moins une des images d'ensemble et un l'azimut de chacune des images ponctuelles dans une autre des images d'ensemble adjacente à la au moins une des images d'ensemble est défini de 0 à 10 degrés.

5. Film rétro-réfléchissant à microbilles de verre muni d'images d'ensemble ayant des directions visuelles selon la revendication 4, dans lequel la différence (Δε) entre un azimut de chacune des images ponctuelles dans au moins l'une des images d'ensemble et un azimut de chacun des images ponctuelles dans une autre des images d'ensemble adjacentes à la au moins une des images d'ensemble est définie de 0 à 7 degrés.

6. Film rétro-réfléchissant à microbilles de verre muni d'images d'ensemble ayant des directions visuelles selon l'une quelconque des revendications 1 à 5, dans lequel une dimension (α) de la dimension conique de la région visible de chacune des images ponctuelles formant les images d'ensemble est réglé de 5 à 20 degrés.

7. Film rétro-réfléchissant à microbilles de verre muni d'images d'ensemble ayant des directions visuelles selon l'une quelconque des revendications 1 à 6, dans lequel le film rétro-réfléchissant à microbilles de verre est un film rétro-réfléchissant à microbilles de verre à lentilles ouvertes, un film rétro-réfléchissant à microbilles de verre à lentilles incorporées ou un film rétro-réfléchissant à microbilles de verre à lentilles capsulaires.

8. Film rétro-réfléchissant à microbilles de verre selon l'une des revendications précédentes, dans lequel, lorsque le film rétro-réfléchissant oscille, les régions visibles se chevauchent partiellement.
